## Europäisches Patentamt

(19) **European Patent Office**

**Office européen des brevets**

(11) Publication number: **0 231 568**
**B1**

(12) # EUROPEAN PATENT SPECIFICATION

(45) Date of publication of the patent specification:
**23.05.90**

(51) Int. Cl.⁵: **F16K 11/085**

(21) Application number: **86300797.7**

(22) Date of filing: **06.02.86**

(54) **Multiport axial valve with balanced rotor.**

(43) Date of publication of application:
**12.08.87 Bulletin 87/33**

(45) Publication of the grant of the patent:
**23.05.90 Bulletin 90/21**

(84) Designated Contracting States:
**AT BE DE FR GB IT NL SE**

(56) References cited:
**AU-A- 49 985**
**GB-A- 701 963**
**US-A- 2 946 348**
**US-A- 2 972 357**
**US-A- 2 985 589**
**US-A- 3 040 777**
**US-A- 3 192 954**
**US-A- 3 422 848**
**US-A- 3 542 072**
**US-A- 4 335 745**
**US-A- 4 402 832**
**US-A- 4 574 840**

(73) Proprietor: **UOP, 25 East Algonquin Road, Des Plaines Illinois 60017-5017(US)**

(72) Inventor: **Schumann, Gary Michael, 2623 North Highland Avenue, Arlington Heights Illinois 60004(US)**
Inventor: **Dolejs, Charles Arthur, 2107 East St. James, Arlington Heights Illinois 60004(US)**
Inventor: **Schick, David Lee, 2385 Lexington Drive, Mount Prospect Illinois 60056(US)**

(74) Representative: **Brock, Peter William et al, URQUHART-DYKES & LORD 91 Wimpole Street, London W1M 8AH(GB)**

## Description

This invention relates to apparatus for transferring a plurality of fluid streams among different locations. More particularly, it relates to a unitary axial multiport rotary valve which is capable of accomplishing the simultaneous interconnection of a plurality of conduits in accordance with a predetermined periodic sequence.

There are many instances in which it is necessary to route a fluid stream to one location for a period of time, then to another location for a period of time, and so forth for multiple locations. This relatively simple problem of routing a single fluid stream to various destinations in a previously determined cycle or periodic sequence is easily accomplished with one or more devices such as a multiport rotary plug valve. When it is necessary to simultaneously route more than a single fluid stream to various destinations, it is highly desirable to use a single device rather than numerous individual valves.

US-A 3 192 954 discloses a valve for such a purpose which comprises a cylindrical casing with a cyclindrical plug rotatable within the casing, the exterior surface of the plug being in fluid tight contact with the interior surface of the casing. Circular grooves extending around the axis of rotation of the valve are provided between the plug and casing, each groove communicating with a respective port in the end of the casing. A further series of ports is spaced around the cylindrical periphery of the casing, each communicating at some point in the rotation of the plug with a respective recess between the cylindrical interior surface of the casing and cylindrical exterior surface of the plug. The plug having a passage for each groove providing communication between its respective groove and one of the recesses, so that each recess is in continuous communication with a corresponding groove for all positions of the plug.

The separation of various substances through selective absorption using a simulated moving bed of adsorbent is an example of a process in which an axial multiport rotary valve is useful. Simulation of a moving adsorbent bed is described in US-A 2 985 589, and the process and apparatus of this patent is depicted therein in Fig. 1. In accomplishing this simulation, it is necessary to connect a feed stream to a series of beds in sequence, firstly to a first bed, then to a second bed, and so forth for numerous beds, the number of beds often being between 12 and 24. These beds may be considered to be portions of a single large bed whose movement is simulated. Each time the feed stream destination is changed, it is also necessary to change the destinations (or origins) of at least three other streams, which may be streams entering the beds, such as the feed stream, or leaving the beds. The moving bed simulation may be simply described as dividing the bed into a series of fixed beds and moving the points of introducing and withdrawing liquid streams past the series of fixed beds instead of moving the beds past the introduction and withdrawal points. A rotary valve used in the process of US-A 2 985 589 may be described as accomplishing the simultaneous interconnection of two separate groups of conduits.

A satisfactory valve design must provide for the simultaneous interconnection of two independent groups of conduits such that each conduit of the first group could be brought into individual communication with every conduit of the second group, so there are two groups of conduits which need to be interconnected. One group consists of the conduits which provide the flows entering and leaving the simulated moving bed adsorbent system, that is, the flows which are switched among the beds, such as the feed stream. A second group consists of the conduits associated with the individual beds, that is, which supply and remove fluid from the beds, one conduit being connected between each two beds. It is to be noted that each conduit of the second group serves that dual function of supply and removal, so that it is unnecessary to provide conduits for supplying fluid separate from those for removing fluid.

There are many different process requirements in moving bed simulation processes, resulting in different flow schemes and thus variations in rotary valve arrangement. For example, in addition to the four basic streams described in US-A-2,985,589, it may be desirable to utilize one or more streams to purge, or flush, a pipeline or pipelines. A flush stream is used to prevent undesirable mixing of components. The flush substance is chosen to be one which is not undesirable for mixing with either main stream, that being purged or that which enters the pipeline after flushing is completed. It may be desirable to pass fluid through a bed or beds in the reverse direction from normal flow. This is commonly known as backflushing.

Multiport rotary disc valves have been fabricated in various sizes up to valves utilizing 1.37 m (4¼ feet) diameter rotors. These valves have seven concentric circumferential grooves, or tracks, and 24 ports spaced around the periphery of the stator. A single valve of this size weighs approximately 11,793 kg (26,000 pounds), has an overall height of about 4.6 m (15 feet), and occupies a plan area of approximately 2.6 by 2.6 m (8½ by 8½ feet). These figures do not include a separate hydraulic power unit used with the hydraulically driven actuator mounted on the valve proper. It can be appreciated that it is desirable to use apparatus of less bulk and weight to accomplish the same functions.

It is an object of the present invention to provide unitary mechanical valve apparatus for simultaneously accomplishing the interconnection of a plurality of conduits in accordance with a previously determined cycle.

The present invention also seeks to provide a valve smaller in physical size and having fewer maintenance requirements than prior art valves.

Broadly the present invention relates to an axial multiport rotary valve useful in transferring a plurality of different fluid streams among different locations in accordance with a previously determined cycle. The fluid streams are contained in conduits which are interconnected by means of the valve. Any conduit communicates with no more than one other conduit at any one cycle step, or valve index position. The conduits to be interconnected are attached to a hollow stationary body, or stator assembly, which is comprised of three sections, or elements, each of which is cylindrical in form. There are fluid flow channels in a rotating body, or rotor assembly, which is located inside the stator assembly and configured in a manner similar to it. The rotor assembly assumes various positions according to the cycle steps and distributes fluid flowing into and out of the valve, by means of the conduits, in a different manner in each cycle step. There are spaces between the rotor and stator assemblies which contain sealing means for prevention of leakage and definition of flow passages.

In particular according to the present invention an axial multiport rotary valve for accomplishing the simultaneous interconnection of a plurality of conduits in accordance with a previously determined cycle, where any conduit communicates by means of the valve, with no more than one other conduit at any one valve index position, is characterised in that the valve comprises:

(a) a stator assembly having a hollow interior and being comprised of a central element, a first end element, and a second end element, each of said elements having a cylindrical exterior form, the central element having first and second interior transverse surfaces, each transverse surface being perpendicular to an axis of rotation, which axis of rotation is the longitudinal axis of both the stator assembly and a rotor assembly, the central element having a plurality of internal ports, each port intersecting both of said interior transverse surfaces, and extending from one of the transverse surfaces toward the other transverse surface and being parallel to the axis of rotation, where the intersections of the ports with each transverse surface are arranged in a circle centered on the axis of rotation, and the central element having a plurality of openings, where each opening extends from a port to the exterior surface of the stator central element;

(b) said rotor assembly comprised of a spacer element, a first end element, and a second end element, where the spacer element is rigidly connected between the end elements, which rotor assembly is located substantially inside the hollow interior of the stator assembly such that a first annular volume is formed between said first rotor end element and said first stator end element, a second annular volume is formed between said second rotor end element and said second stator end element, a first transverse volume is formed between said first transverse surface of said central stator element and an end surface of the first rotor end element, and a second transverse volume is formed between said second transverse surface of said central static element and an end surface of the second rotor end element, each of said rotor element end surfaces being parallel to said central stator element transverse surfaces, which rotor assembly rotates about said axis of rotation to various valve index positions in accordance with said previously determined cycle, and which rotor assembly has a plurality of interior channels;

(c) a plurality of nozzles for connection of said conduits to the valve, the nozzles being located on the stator assembly and providing fluid paths between conduits and said annular volumes inside the stator assembly and between conduits and said central stator element openings;

(d) means in said annular volumes for definition of fluid passages which communicate with said interior channels of the rotor assembly, such that fluid passes between said rotor and element nozzles and said rotor channels via said annular volume fluid passage means;

(e) port sealing means for preventing flow through only one end of each of said central stator element ports, and transferring at least a portion of the force resulting from fluid pressure exerted on it to the adjacent rotor end element, the effective axial pressure area associated with each port end region being the same for the two ends of any particular port, whereby force exerted on the left rotor end element by fluid in any port is substantially equal to force exerted on the right rotor end element by fluid in that same port, thereby providing a balanced rotor assembly floating between its axial restraints; and

(f) means in said transverse volumes for definition of fluid passages which communicate between said interior channels of the rotor assembly and the ends of said ports which are not equipped with said port sealing means, such that fluid passes between said central stator element nozzles and said rotor channels via said central stator element openings, at least a portion of said ports, and said transverse volume fluid passages, thereby completing fluid paths so that different pairs of nozzles communicate at each valve index position, in accordance with said previously determined cycle.

Among the unique features of the present invention is an arrangement for eliminating or minimizing unbalanced axial force resulting from the pressures exerted by the fluids flowing through the valve. The rotor assembly is configured such that axial forces exerted by the fluid streams are exerted equally in both directions, thereby providing a balanced rotor assembly floating between its axial restraints. In this embodiment, each port of the stator central element intersects both of said interior transverse surfaces of the stator central element, said port sealing means transfers at least a portion of the force resulting from fluid pressure exerted on it to the adjacent rotor end element, and effective axial pressure area associated with each port end region is the same for the two ends of any particular port, whereby force exerted on the left rotor end element by fluid in any port is substantially equal to force exerted on the right rotor end element by fluid in that same port.

It will also be appreciated that the present invention enables the production of a smaller and lighter valve than known valves. It is highly desirable to use a single device to simultaneously transfer all of the fluid streams, thereby avoiding the obvious problems associated with numerous separate valves which must be simultaneously actuated.

Embodiments of the invention will now be described, by way of example, with reference to the accompanying drawings, in which:

FIGURE 1 is a schematic depicting the "Broughton" process disclosed in US-A-2,985,589; it shows a vessel containing a plurality of beds and conduits connecting the beds with an axial multiport rotary valve and also shows conduits for streams entering and leaving the process connected to the valve.

FIGURE 2 depicts a multiport axial rotary valve with piping and labels referring to FIGURE 1. Certain details are omitted for the sake of drawing convenience.

FIGURE 3 is a vertical section view of the central portion of valve of FIGURE 2, which includes portions of rotor and stator end elements. The rotor position is that of cycle step 1. Certain details are omitted for the sake of drawing convenience. Section arrows show how FIGURE 6 is taken

FIGURE 4 is a partial section view of the left hand end of the valve of FIGURE 2, including a portion of a stator end element, and a portion of a rotor element. The rotor position is that of cycle step 1. Certain details are omitted for the sake of drawing convenience.

FIGURE 5 depicts a rotating seal ring.

FIGURE 6 is a section, taken as shown in FIGURE 3, of the central portion of the valve of FIGURE 2. The rotor assembly is shown in two different positions, representing two steps in the process of FIGURE 1.

FIGURE 7 is a section view of an open rotor seal element.

FIGURE 8 is a top view of the open rotor seal element of FIGURE 7.

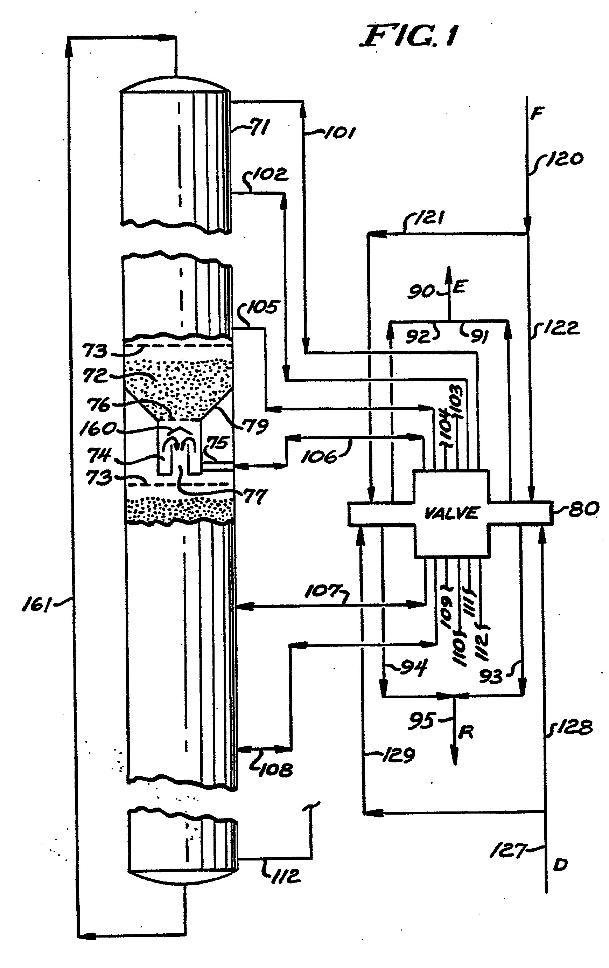

Following is a description of the embodiment of the invention shown in FIGURES 1 through 8. It is not intended that such description be construed as limiting the scope of the invention in any way; the description of this example is merely a convenient means to become familiar with the invention. The elements of the invention may be arranged to form other embodiments and more or fewer conduits than shown in these drawings may be accommodated. Various required equipment, such as pumps and control valves, has been omitted as not essential to an understanding of the invention, the application of such being within the capabilities of those skilled in the art.

FIGURE 1 depicts an exemplary processing system which will be used in describing the invention. This process is described fully in previously mentioned US-A-2,985,589 and it is only necessary to describe herein, in order to understand the present invention, the required fluid flow arrangement and cycle, further details being available from the patent. An explanation of the process is presented above and supplemented in the following paragraphs.

Referring to FIGURE 1, there are twelve beds in vessel 71; one bed 72 is shown in the cutaway portion of FIGURE 1. The bed 72 is retained by bed support means 76, such as a screen, at the bottom of the conical section 79. Liquid is distributed evenly over the top of the bed by distributor 73, which may be a perforated plate. Liquid which flows through the bed is collected in reservoir 74. If liquid is to be removed from reservoir 74, it will flow out through an internal conduit 75 which communicates between the reservoir and a conduit 106 external to vessel 71. Conduit 106 carries liquid to rotary valve 80. If liquid is not to be removed, the flow path is blocked inside valve 80 and liquid overflows the reservoir and passes through downcomer 77 to another distributor 73, to be distributed over the next lower bed. If liquid is to be added, it flows in from the valve through conduit 106, overflows into the downcomer, and is distributed over the next lower bed in the same manner as liquid flowing through bed 72. Baffle 160 prevents liquid leaving bed 72 from passing directly through downcomer 77 without being collected in reservoir 74. A conduit such as conduit 106 is associated with each bed and functions in the same manner as conduit 106. The twelve conduits, each of which runs between the vessel and the valve, are denoted 101 through 112.

There are four basic process streams. There may be additional streams, such as the flush stream mentioned above. This example is limited to the four basic process flows, whose connection points to vessel 71 and the beds therein are changed at each cycle step. They are labeled in FIGURE 1; F denotes feed (conduits 120, 121, 122) D denotes desorbent (conduits 127, 128, 129), E denotes extract (conduits 90, 91, 92), and R denotes raffinate (conduits 93, 94, 95). Each of the conduits containing a process stream has two branches, one branch conduit connecting to each end of the valve. For example, the branch conduits of extract conduit 95 are conduits 93 and 94.

Since there are twelve beds and four process streams, liquid flows to or from any given bed only intermittently. The simulated moving bed may be viewed as being divided into four zones, one zone corresponding to each process stream. For example, if each zone contains three beds, liquid flows in conduit 106 every third step and during the other two steps, all liquid leaving bed 72 flows through downcomer 77 to the bed below. If the beds are numbered from B1 through B12, starting at the top of vessel 71, bed 72 is B6. If, at cycle step 1, feed (F) flows to bed B6, then raffinate (R) will flow from bed B9, desorbent (D) will flow to bed B12, and extract (E) will flow from bed B3. During step 2, F will flow to B7, R from B10, D to B1 and E from B4. The flows will sequence in a similar manner through the balance of the twelve steps of the cycle and then repeat. Return line 161 carries liquid which has passed through bed B12 (or entered through conduit 112) to the top of vessel 71 for distribution over bed B1. It is not necessary that each zone contain an equal number of beds. In the detailed example, two zones each contain 2 beds and two zones each contain 4 beds. This can be seen by referring to FIGURE 8.

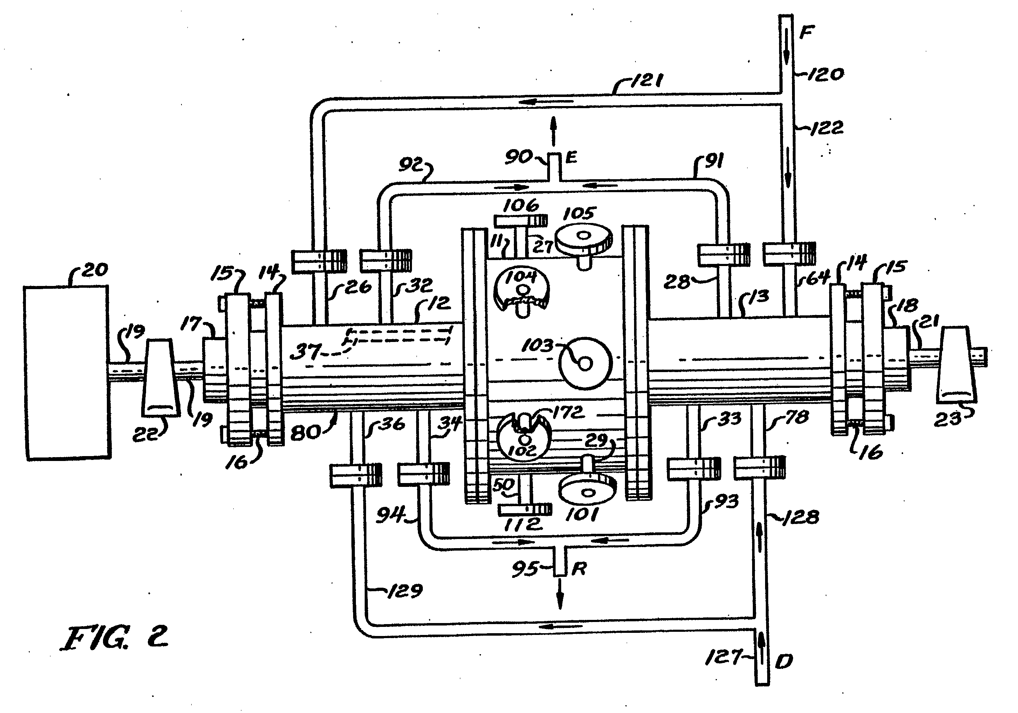

Referring to FIGURE 2, a hollow stator assembly is comprised of central element 11, end element 12, and end element 13. In this embodiment of the invention, the end elements of the stator assembly are bolted to the central element (bolts not shown for drawing convenience). A rotor assembly is located substantially within the hollow interior of the stator assembly. Only a portion of the rotor assembly is shown in FIGURE 2. Rotor end element 17 projects out of stator end element 12 and rotor end element 18 projects out of stator end element 13. Attached to the rotor are shafts denoted by 19 and 21, and the rotor is supported in bearing assemblies 22 and 23. Each stator end element has a flange 14, to which seal ring followers 15 are attached by bolts 16. The function of the seal ring followers is discussed below. Either assembly, rotor or stator, may be separable into parts independent of the terminology used herein; the use of the word elements is not intended to convey that the assembly must be separable into the three elements described. each of the stator elements is cylindrical in exterior form.

Means for rotating the rotor assembly about an axis of rotation are denoted by reference number 20. The axis of rotation is the extended center line of shafts 19 and 21, or the longitudinal axis of both assemblies. In this particular example, the rotor is rotated in 30° increments, with any one of twelve rest positions of the rotor being defined as a valve index position and representing the rotor position at, or during, a single cycle step. Such means for indexing a shaft, or rotating it in increments of usually less than a full rotation, are well known and may be characterized broadly as hydraulic, electrical, or electromechanical. An example of means for rotating may be found in US-A-2,948,166.

Referring to FIGURES 1 and 2, the twelve conduits, 101 through 112, are connected to twelve nozzles attached to stator central element 11 of valve 80. Five of the nozzles do not appear in FIGURE 2. The nozzles of FIGURE 2 are labeled 101 through 106 and 112 to indicate which conduits are connected to them, e.g., conduit 106 is connected to nozzle 27. There are four nozzles attached to each stator end element, 12 and 13. Each of the four process streams is routed to each end element. For example, feed (F) in conduit 120 is supplied to each end element by means of conduits 121 and 122, which branch off from conduit 120.

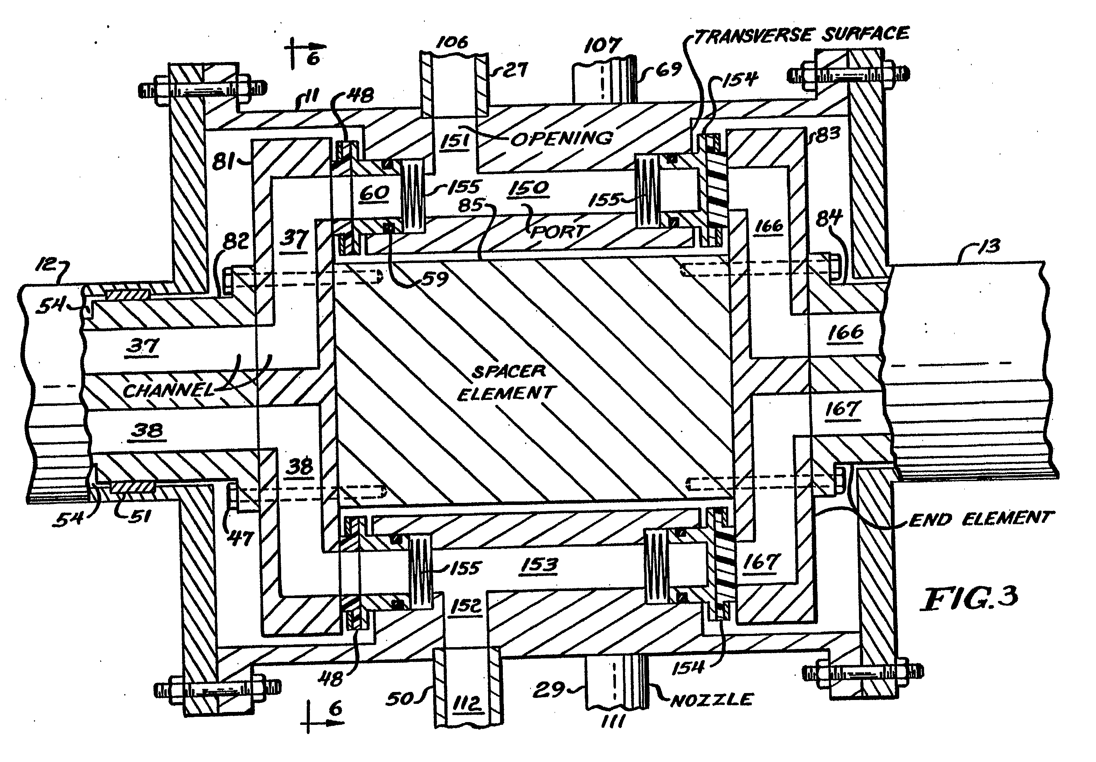

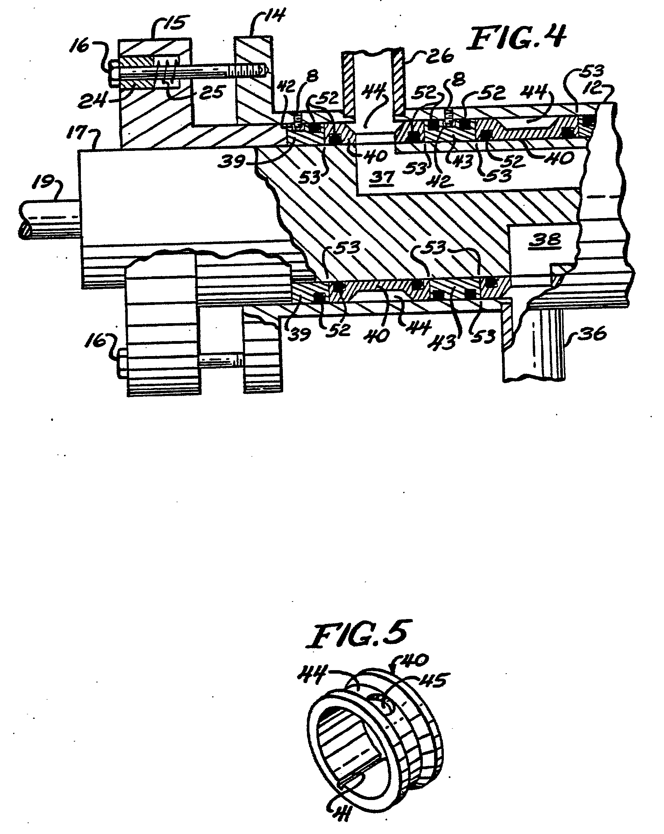

Now referring to FIGURE 4, which depicts the left end of the exemplary valve, the applicable reference numbers of FIGURE 2 are used. Rotor end element 17 is located substantially inside stator end element 12. Nozzles 26 and 36 of FIGURE 2 are shown in FIGURE 4. Two interior channels 37 and 38 are shown in rotor end element 17. One channel (37) is depicted in FIGURE 2. There are two additional channels (not shown) in rotor element 17 and all four channels, which comprise a first group, extend into the rotor end element portion which is shown in FIGURE 3. Channel 37 communicates with nozzle 26 and channel 38 communicates with nozzle 36. Stator end element 12 has a larger inside diameter than the outside diameter of rotor end element 17, thus forming an annular space, or annular volume, between the elements. As shown in FIGURE 4, this annular space contains a number of seal rings. In contact with the portion of seal ring follower 15 which projects into the annular volume is an end seal ring 39. Adjacent to end seal ring 39 is a rotating seal ring 40 and next to that is a stationary seal ring 43. Another rotating seal ring 40 is adjacent to stationary seal ring 43 on the other side. In a similar manner, an annular volume is formed between rotor end element 18 and stator end element 13 (FIGURE 2).

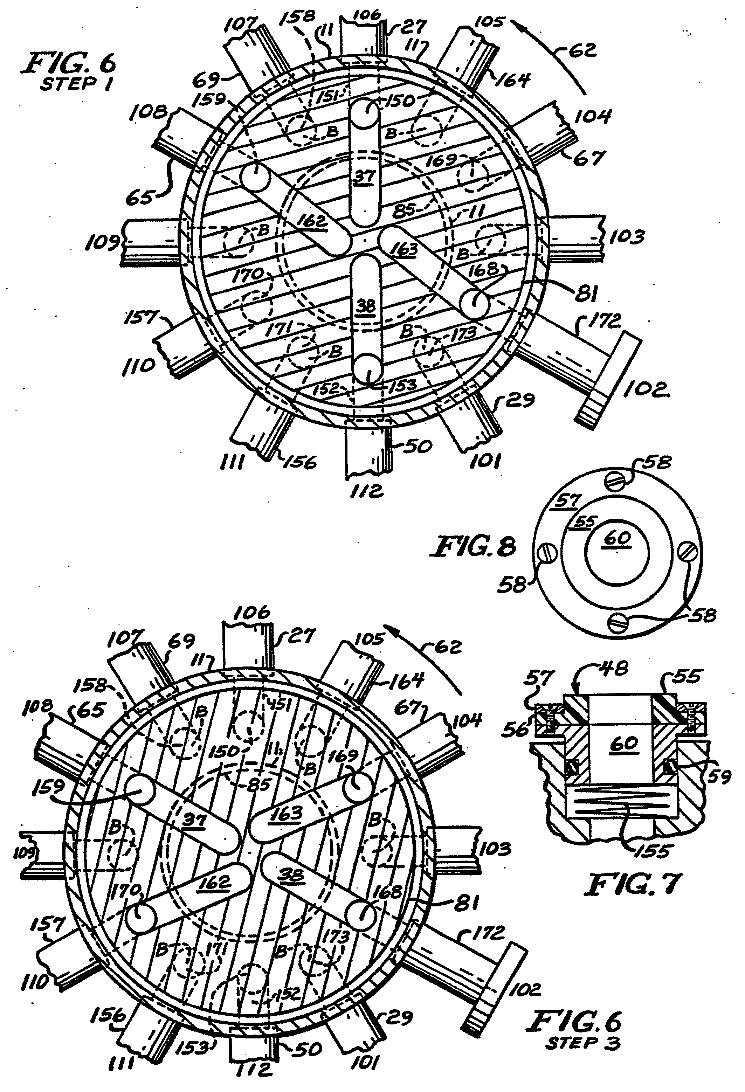

All of the nozzles located on the stator end elements communicate with the annular spaces existent between the rotor end elements and the stator end elements. The seal rings are means by which fluid passages in the end element annular spaces are defined, intermixing of fluids in the annular spaces is prevented, and external leakage is prevented. For example, fluid flowing in channel 37 and nozzle 26 is separated from fluid in channel 38 and nozzle 36 by the seal rings. Rotating seal ring 40 extends circumferentially around the rotor end element and is configured such that annular passage 44 is formed in a portion of the annular space between the stator and rotor end elements, between the inside wall of the stator end element and the outside surface of ring 40. FIGURE 5 shows an entire rotating seal ring. Note that O-rings 52 are omitted from the inner surface of the seal ring depicted in FIGURE 5. An aperture 45 (FIGURE 5) in seal ring 40 is aligned with channel 37 and permits fluid to flow between channel 37 and annular passage 44. Since annular passage 44 is circumferential, extending 360° around the rotor assembly, the passage is always in communication with nozzle 26, thereby nozzle 26 and channel 37 are always in communication. Similarly, each of the other channels of the left rotor end element are always in communication with a particular nozzle attached to the left rotor end element (nozzles 32, 34 and 36 of FIGURE 2). Note that the aperture 45 in a seal ring 40 is always aligned with a nozzle but not always aligned with the end of a channel as shown in FIGURE 4. An O-ring 52 is located on each side of the ring 40, as shown in FIGURE 4, to prevent fluid from the aperture 45 and the annular passage 44 from flowing in a longitudinal direction parallel to the axis of rotation along the outside surface of the rotor end element and the inside surface of the ring 40.

End seal ring 39 does not rotate and is held in place by means of a set screw 8 inserted through the wall of the stator element and projecting into cavity 42 of ring 39. Rotating seal rings 40 are attached to the rotor and rotate with it. Attachment is accomplished by means of a groove 41 (see FIGURE 5) in each rotating seal ring 40. There are tongues (not shown) on rotor end element 17 which matches the grooves for each seal ring 40. When tongue and groove are engaged, a seal ring is locked in place. Stationary seal ring 43 is prevented from rotating by means of a set screw in the same manner as end seal ring 39. O-rings 52 prevent fluid leakage between the rotor end element and rotating seal rings 40, as described above, and between the stator end element and the stationary seal rings 43 or end seal ring 39, in the same manner. Leakage does occur between the wall of the stator and rotating seal ring 40. This leakage lubricates and is contained at seal interface 53 which extends 360° around the rotor end element and is in a plane perpendicular to the axis of rotation. The sealing surfaces at interface 53 may be any of the well-known materials used in applications where a stationary seal face bears against a rotating seal face. For example, a common pair of seal face materials are carbon and tungsten. Seal ring 40 may be fabricated entirely of tungsten and rings 39 and 43 may be fabricated entirely of carbon, or carbon and tungsten may be applied to other base ring materials solely to form the sealing surfaces at interface 53.

The complete arrangement of the left rotor end element may now be understood. A rotating seal ring 40 is located at each of the four nozzles of stator end element 12. Between the rotating seal rings are located stationary seal rings 43. There are three stationary rings at each end element. At each end of the annular space formed by the left end elements is an end seal ring 39. The rotor end element shown on the right in FIGURE 2 is arranged in the same manner. Only one end of the annular space between end elements can be seen in FIGURE 4. The other end is shown in FIGURE 3, where it can be seen that the assembly of seal rings in annular volume 54 (rings not shown) is retained by a shoulder on the rotor end element which is adjacent to rotor sleeve 51. At the outboard end, the assembly of rings is held in place by seal follower 15 (FIGURE 4). Also, sealing force is applied to the sealing surface interfaces 53 by means of seal follower 15. A spring 25 is provided at each of several bolts 16. Spacers 24 enable springs 25 to be compressed by turning bolts 16 and, therefore, urge seal follower 15 toward the stator central element, thereby providing sealing force.

The arrangement of the left portion of the valve of FIGURE 2 has been described in detail; the right portion of the valve, is similar. FIGURE 4 in a mirror image configuration would depict the right hand portion of the valve.

FIGURE 3 shows stator central element 11 and portions of stator end elements 12 and 13, along with rotor spacer element 85 and portions of rotor end elements 17 and 18. As shown in this example, end element 17 is comprised of components 81 and 82 and end element 18 is comprised of components 83 and 84. Rotor spacer element 85 and rotor end element 17 are fastened together by means of bolts such as 47. Rotor sleeve 51 provides spacing between stator element 12 and rotor element 17 and serves as a bearing. Ports, such as the two ports shown in FIGURE 3 and denoted 150 and 153, extend through the inner portion of central stator element 11. Each port is parallel to the longitudinal axis of the valve and extends from one transverse surface of the stator central element to the other. Associated with each port is a fluid path denoted an opening, such as openings 151 and 152. Each opening extends to the exterior of the stator central element and provides a fluid path between a port and a nozzle. For example, opening 152 communicates between port 153 and nozzle 50. In this embodiment, there are twelve ports, all of which can be seen in FIGURE 8.

The right hand ends of channels 37 and 38 (the left ends are shown in FIGURE 4) communicate with a transverse space, or transverse volume, formed between a portion of the end face of rotor end element component 82 and stator central element 11. Fluid flows between nozzle 27 and rotor channel 37 via opening 151, a portion of port 150, and a portion of the transverse volume. Definition of fluid passages and prevention of intermixing, in the transverse volume, of these streams and others is accomplished by means of open rotor seal elements 48. The flow path through rotor seal element 48 is denoted by reference number 60. FIGURE 7 shows a section view of a single rotor seal element 48. FIGURE 8 shows a top view, including the sealing surface, of a rotor seal element 48. Blind rotor seal elements 154 are provided at the end of each port which is not equipped with an open rotor seal element 48, as can be seen for ports 150 and 153. As can be seen from FIGURE 3, a blind rotor seal element is identical to an open rotor seal element except that the flat plate end closure is extended to block the fluid passage in the blind element, so that fluid cannot flow through it. Thus fluid in channels 166 and 167, which are located in the right rotor end element, is prevented from entering ports 150 and 153.

A rotor seal element is located at each end of each port in the stator central assembly. In this embodiment, there are twelve open rotor seal elements 48 and twelve blind rotor seal elements 154. A length of cylindrical conduit which comprises an elongated cylindrical portion of an open rotor seal element 48 is located within a portion of port 150. That portion of port 150 has a larger diameter than other portions of the channel such that a shoulder is formed to retain spring 155 (FIGURE 3). Each rotor seal element is provided with O-ring 59 (FIGURE 7) around its outer circumference to prevent leakage along the wall of the port. A flat plate portion is attached to the cylindrical portion and is covered by rotor seal element seat 56 (FIGURE 7). Spring 155 presses sealing face 55 against the end surface of rotor end element component 81, which is smooth and polished to prevent leakage. Sealing face 55 is a portion of rotor seal element seat 56, which is formed of a soft elastomeric material. Rotor seal element seat 56 is held in place by means of retainer 57 and four screws 58. Rotation of the rotor assembly results in wear at surface 55, as a result of the movement of the surface around the interior wall of the stator central element. Spring 155 provides sealing force and will maintain it as wear occurs, but periodically rotor element seat 56 will need to be replaced. The movement of rotor seal element 48 in the enlarged portion of channel 37 is relatively small and such movement does not affect the sealing ability of O-ring 59. As mentioned above blind rotor seal elements 154 are identical except that the flat plate portion covers the fluid passage.

All of the conduits shown in FIGURE 1 are connected to the stator assembly by means of nozzles. There are twenty nozzles in this embodiment of the invention. The nozzles, which are attached to the stator and provide fluid passages between the interior of the stator and conduits connected to the nozzles, may be divided into four sets depending on their location on the stator assembly. Nozzle 26 is representative of nozzles in a first set located on one stator end assembly, in this case, the end element shown on the left in FIGURE 2. Nozzle 28 is representative of a second set of nozzles located on another stator end element, depicted on the right in FIGURE 2. A third set of nozzles is attached to the central stator element adjacent to the left stator end element and includes nozzle 27. Nozzle 29 is representative of a fourth set of nozzles attached to the central stator element adjacent to the right stator end element. Not all of the nozzles are shown in FIGURE 2. There are six nozzles in the third set, which includes nozzle 27. Two of the nozzles of the third set are not visible in FIGURE 2; they are located in positions on the back of the stator central element. The nozzles of the third set are equally spaced around the stator central element, 60° apart and their center lines are all in a single plane normal to the axis of rotation and adjacent to the left rotor element. The nozzles of the fourth set are arranged in a manner similar to the third set but are offset by 30° from the third set of nozzles. Only three third set nozzles can be seen in FIGURE 2.

In FIGURE 6, all of the nozzles of the third and fourth sets are shown. The section arrows of FIGURE 3 show how the FIGURE 6 section is taken. Arrow 62 shows the direction of rotation of the rotor assembly. the numbers denoting the twelve conduits connecting the valve to vessel 71 (FIGURE 1) are shown in FIGURE 6 at the appropriate nozzle to enable the flow paths to be easily understood. All of the ports and openings are depicted. For example, conduit 112 connects to nozzle 50, which communicates with port 153 by means of opening 152.

Portions of the four channels of the left rotor end element (37, 38, 162, and 163) are shown. Channels 37 and 38 appear in FIGURES 3 and 4, while channels 162 and 163 cannot be seen in those views. FIGURE 6 does not show the channels of the right rotor end element, such as channels 166 and 167, which can be seen in FIGURE 3; the right end channels are located directly behind the left end channels when viewing the valve in the same manner as FIGURE 6. For example, channel 166 is located directly behind channel 37. The channels may be divided into two groups, a first group located in the left rotor end element and a second group located in the right rotor end element. The ports may be divided into two groups, a first group which communicates with channels of the first group and has open rotor seal elements in the left hand port ends, and a second group which communicates with channels of the second group and has open rotor seal elements in the right hand port ends. The openings can be divided into a first and a second group corresponding with the groups of ports.

Six of the twelve ports depicted in FIGURE 6 are labeled with a letter B; this indicates that a blind rotor seal element is located in that end of that port. The other six port ends shown are equipped with open rotor seal elements. As mentioned above, each port is open on only one end, blocking of the fluid passage being accomplished by the blind rotor seal elements. For example, port 158 has a blind rotor seal element located at its left end (shown in FIGURE 6) and an open rotor seal element at its right end (not shown). By way of further example, see ports 150 and 153 of FIGURES 3 and 6.

The complete fluid flow paths through the valve at each cycle step may now be described. At cycle step 1, feed (F) entering the valve flows through conduit 121 (FIGURES 1 and 2) to nozzle 26 (FIGURES 2 and 4). It flows from the nozzle to channel 37, passing through the annular space between rotor and stator end elements, which space contains a seal ring 40 having aperture 45 (FIGURE 4). F then passes through rotor end element channel 37 into port 150 (FIGURES 3,4, and 6) via an open rotor seal element 48 having fluid passage 60, which seal element transfers the feed through the transverse space, or volume, between rotor end element component 81 and central stator element 11 (FIGURE 3). From port 150, F flows to conduit 106 via opening 151 and nozzle 27. The other end of port 150 is sealed by a blind rotor seal element 154 (FIGURE 3).

At cycle step 1, F entering the valve from conduit 122 via nozzle 64 flows into channel 166 in the right rotor end element in the same manner as described for the left rotor end element. As can be seen from FIGURE 3, it is prevented from flowing further by the blind rotor seal element.

Also in step 1 of the cycle, raffinate (R) enters the valve from conduit 108 via nozzle 65 (FIGURES 1 and 6), flows through an opening into port 159 (FIGURE 6), and then flows through an open rotor seal element located in the left transverse volume to channel 162 (FIGURE 6). It passes from channel 162 to nozzle 34 (FIGURE 2) via a seal ring. From nozzle 34, R passes into conduit 94 and then conduit 95. In a similar manner, the flow path for D in step 1 includes conduits 127 and 129, nozzle 36, channel 38, port 153, opening 152, nozzle 50, and conduit 112. In step 1, E flows through conduit 102, nozzle 172, port 168, channel 163, nozzle 32, conduit 92, and conduit 90.

In cycle step 2, F flows through conduit 122 (FIGURES 1 and 2), nozzle 64 (FIGURE 2), channel 166 (FIGURE 3), port 158 (FIGURE 6), nozzle 69 (FIGURE 6), and conduit 107 (FIGURES 1 and 6). Also D flows through nozzle 78, channel 167, port 173, nozzle 29, and conduit 101. FIGURE 6, step 3, depicts step 3 of the cycle, where F enters the valve through nozzle 26 and flows through channel 37, just as in step 1, but flows from channel 37 to port 159 and then to conduit 108 via nozzle 65. Also in step 3, R flows into the valve from conduit 110 via nozzle 157 and passes through port 170 to the channel dedicated to raffinate (162).

The rotor assembly of this embodiment is arranged so that is is not subject to unbalanced forces resulting from the fluid flowing through it. Each flowing stream exerts the same force on the left rotor end element that it exerts on the right rotor end element, so that the rotor assembly "floats" in the center of the stator assembly and the bearings are not required to accept unduly large axial forces. It can be seen that no unbalanced force can exist as a result of fluid pressure in a rotor assembly channel except in the end of a channel adjacent to a stator central element port. For convenience, the term port end region will be defined to include not only the actual port ends but also the portion of a channel having the same longitudinal axis as the port.

Referring to FIGURE 3, if the right end of port 150 is blocked by a plug which is rigidly attached to stator central element 11 in place of the blind seal element 154 which is shown, it can be seen that the pressure of the fluid in port 150 and the end of channel 37 will give rise to a force tending to move the rotor assembly to the left. Force exerted in an axial direction as a result of the fluid pressure would be exerted on the port end area to the left and on the stator central element to the right, causing an unbalanced force on the rotor assembly.

The blind rotor seal element transfers the force exerted on it by the fluid contained in port 150 to component 83 of the right rotor end element. Thus force is exerted as a result of the fluid in port 150 which tends to move the rotor assembly to the right, counteracting the leftward force and resulting in a balanced condition.

It can be seen that the effective axial pressure area associated with each port end region must be the same for the two end regions of any port. This is so because force in the produce of pressure times area and the pressure is the same throughout any particular port and its end regions. Effective axial pressure area refers to the area subjected to pressure which gives rise to an axial force. Referring to FIGURE 3, it can be seen that if the portion of channel 37 defined as being part of the port end region were enlarged in diameter, the effective axial pressure area would be made greater by the enlargement, resulting in a larger force being developed. This is simply an application of the well known piston effect, where force is amplified by use of pistons of different areas.

It can be seen that each stream flowing through the valve exerts equal force on the rotor assembly in each axial direction. Thus it make no difference if one or more of the fluid streams flowing through the valve is greatly different in pressure from the others, for purposes of a balanced rotor. The arrangement of nozzles on the stator central element has no bearing on the pressure effects on the rotor assembly. For example, the nozzles may be arranged in a single row, if desired.

It can be seen that nozzles of the first set communicate with third set nozzles by means of channels of the first group, passages in the left hand annular space between end elements, ports and openings of the first group and passages in the transverse volume adjacent to the left rotor end element. Nozzles of the second set communicate with fourth set nozzles in a similar manner, the flow paths including channels in a second group of channels.

In the detailed example presented herein, where the fluids flowing in the process are liquids, pumps are required at certain locations. No further mention of apparatus such as pumps and compressors used to transfer fluid need be made, as those familiar with chemical processing are able to appreciate when such apparatus is required and where in the process it needs to be located.

Means for sealing other than the seal rings described above may be used. The annular space between end elements may be filled with conventional shaft packing and compressed by means similar to seal ring follower 15. Stationary lantern rings may be used in place of the rotating seal rings to provide fluid flow passageways analogous to annular passage 44. Another alternate to the above-mentioned seal rings is lip-type seals. These might be used alone or in conjunction with rings spaced along the shaft to aid in defining fluid passages, such rings being identical in configuration to a stack of flat washers. In a similar manner, there are alternates to the use of rotor seal elements 48. For example, a single large round seal plate having an elastomeric covering or liner and a center opening to accommodate a rotor spacer element might be used. A liner could be of tetrafluoroethylene, either reinforced or non-reinforced, having apertures in appropriate locations to allow fluid to flow.

Valves having different numbers of nozzles than shown in the example, to accommodate more or fewer conduits, can be designed. As discussed above, it may be desirable to utilize flushing fluids; nozzles and channels can easily be provided for this purpose. It can be seen that there is space inside the valve which will be filled with liquid. If there is a problem of cross-contamination due to this liquid, an inert liquid at a relatively high pressure may be used to purge these interior spaces. When a rotary valve is referred to as indexing, it is meant that the rotor assembly is moving. A valve index position refers to one of the positions of a rotor assembly which is stationary and where openings are in register. The components of the present invention may be fabricated from suitable materials of construction, such as metals or plastics. Sizing of the flow passages is easily accomplished by reference to any of the numerous standard methods which are available.

To illustrate valve dimensions, a rotor assembly for a valve suitable for use in the "Broughton process" described in US-A-2,985,589 with twelve beds and moderate fluid flow rates requiring 38.1 mm (1½ inches) diameter channels may have a total length of 1.07 m (42 inches), with a diameter of 127 mm (5 inches) at the end elements and 254 mm (10 inches) at the central element. A rotor end element having four 102 mm (4 inch) diameter channels to handle fluids at moderate pressures may have a diameter of 355.6 mm (14 inches).

In the examples presented, nozzles have been shown as short lengths of conduit attached to, or located on, the stator assembly and having flanges for connection to the conduits to be interconnected by the valve. However, the term nozzle is used broadly to indicate means of communication between conduits and annular volumes. For example, if it is desired to connect conduits to a valve by means of welding, the term nozzle may refer to openings in the walls of the stator assembly, the stator wall being configured to accept welded-on conduits.

**Claims**

1. An axial multiport rotary valve for accomplishing the simultaneous interconnection of a plurality of conduits in accordance with a previously determined cycle, where any conduit communicates, by means of the valve, with no more than one other conduit at any one valve index position, the valve comprising:
(a) a stator assembly (11–13) having a hollow interior and being comprised of a central element (11), a first end element (12), and a second end element (13), each of said elements having a cylindrical exterior form, the central element (11) having first and second interior transverse surfaces, each transverse surface being perpendicular to an axis of rotation, which axis of rotation is the longitudinal axis of both the stator assembly (11–13) and a rotor assembly (17, 18), the central element (11) having a plurality of internal ports (150, 153), each port intersecting both of said interior transverse surfaces, and extending from one of the transverse surfaces toward the other transverse surface and being parallel to the axis of rotation, where the intersections of the ports with each transverse surface are arranged in a circle centered on the axis of rotation, and the central element (11) having a plurality of openings (151, 152), where each opening (151, 152) extends from a port (150, 153) to the exterior surface of the stator central element;
(b) said rotor assembly (17, 18) comprised of a spacer element (85), a first end element (17), and a second end element (18), where the spacer element (85) is rigidly connected between the end elements, which rotor assembly is located substantially inside the hollow interior of the stator assembly such that a first annular volume is formed between said first rotor end element (17) and said first stator end element (12), a second annular volume is formed between said second rotor end element (18), and said second stator end element (13), a first transverse volume is formed between said first transverse surface of said central stator element (11) and an end surface of the first rotor end element (17), and a second transverse volume is formed between said second transverse surface of said central stator element (11) and an end surface of the second rotor end element (18), each of said rotor element end surfaces being parallel to said central stator element transverse surfaces, which rotor assembly rotates about said axis of rotation to various valve index positions in accordance with said previously determined cycle, and which rotor assembly has a plurality of interior channels (37, 38, 166, 167);
(c) a plurality of nozzles (26–29, 32–34, 36, 50, 64, 78) for connection of said conduits to the valve, the nozzles being located on the stator assembly (11-13) and providing fluid paths between conduits and said annular volumes inside the stator assembly and between conduits and said central stator element openings (151, 152);

(d) means (39, 40, 43) in said annular volumes for definition of fluid passages which communicate with said interior channels of the rotor assembly, such that fluid passes between said rotor end element nozzles and said rotor channels via said annular volume fluid passage means;
(e) port sealing means (154) for preventing flow through only one end of each of said central stator element ports (150, 153), and transferring at least a portion of the force resulting from fluid pressure exerted on it to the adjacent rotor end element, the effective axial pressure area associated with each port end region being the same for the two ends of any particular port, whereby force exerted on the left rotor end element by fluid in any port is substantially equal to force exerted on the right rotor end element by fluid in that same port, thereby providing a balanced rotor assembly floating between its axial restraints and
(f) means (48) in said transverse volumes for definition of fluid passages which commnunicate between said interior channels (37, 38) of the rotor assembly and the ends of said ports (150, 153) which are not equipped with said port sealing means, such that fluid passes between said central stator element nozzles and said rotor channels (37, 38) via said central stator element openings (151, 152), at least a portion of said ports (150, 153), and said transverse volume fluid passages, thereby completing fluid paths so that different pairs of nozzles communicate at each valve index position, in accordance with said previously determined cycle.

2. A valve according to claim 1, further characterized in that said nozzles are divided into four sets of nozzles, a first set (26, 32, 34, 36) attached to said first stator end element (12), a second set (28, 33, 64, 78) attached to said second stator end element (13), a third set (27, 50) attached to said central stator element (11) adjacent to the first stator end element (12) and a fourth set (29) attached to the central stator element (11) adjacent to the second stator end element (13), said channels are divided into two groups, a first group (37, 38, 162, 163) containing channels located in the first rotor end element (17) and a second group (166, 167) containing channels located in the second rotor end element (18), said ports are divided into two groups, a first group of ports (150, 153, 159, 168-170) which is in register with channels of the first group at each valve index position and a second group of ports (158, 171, 173) which is in register with channels of the second group at each valve index position, and said openings are divided into two groups, a first group (151, 152) adjacent to the first stator end element (12) and a second group adjacent to the second stator end element (13), so that nozzles of said first set of nozzles communicate with nozzles of said this set by means of passages in said first annular volume, channels in said first group of channels, passages in said first transverse volume, ports of said first group of ports, and openings of said first group of openings, and so that nozzles of said second set communicate with nozzles of said fourth set by means of passages in said second annular volume, channels of said second group, passages in said second transverse volume, ports of said second group, and openings of said second group.

3. A valve according to claim 1 or 2, further characterised in that said means in said annular volumes comprises a rotating seal ring (40) attached to and extending circumferentially around a rotor end element, said ring (40) having a height approximately equal to the width of said annular volume between rotor and stator end elements and having a length sufficient to contain an aperture (45) and an annular passage (44), which aperture (45) and annular passage (44) provide a fluid flow path between a channel and a nozzle, said annular passage extending 360° around the ring and bounded on one side by a portion of inside surface of a stator end assembly and on the other sides by the ring, said ring (40) having means (52) for sealing to prevent fluid from said aperture (45) and channel from flowing in a longitudinal direction parallel to said axis of rotation along the interface of a portion of surface of the rotor end element and the inside surface of said ring, and said ring having two lubricated rotating seal surfaces extending 360° around the ring in planes perpendicular to said axis of rotation, where lubrication for said surfaces is provided by fluid leakage from said annular passage along the interface of outside surfaces of the ring and portions of the interior surface of the stator end element.

4. A valve according to any of the preceding claims, further characterised in that said means in said annular volumes comprisess a stationary seal ring (39, 43) attached to a stator end element and extending circumferentially around a rotor end element, said stationary seal ring having a height approximately equal to the width of said annular volume between stator and rotor end elements, said stationary seal ring having means (52) for sealing to prevent fluid from flowing in a longitudinal direction parallel to said axis of rotation along the interface of the outside surface of the stationary seal ring and a portion of inside surface of the stator end element, and said stationary seal ring (39, 43) having at least one lubricated stationary seal surface extending 360° around the stationary seal ring in a plane perpendicular to said axis of rotation, where lubrication for said seal surface is provided by fluid leakage from an annular volume fluid passage.

5. A valve according to any of the preceding claims, further characterized in that said means in said transverse volumes comprises an open rotor seal element (48) comprised of a length of cylindrical conduit at least partially located in and concentric with an enlarged diameter end portion of a port, which port is cylindrical in form, said open rotor seal element (48) having means (59) for sealing to prevent fluid flow in a direction parallel to the longitudinal axis of said conduit length along the interface of the surface of said enlarged port portion and the external surface of the conduit length, having a flat plate sealably attached to said conduit at one end, said plate being perpendicular to the longitudinal axis of said conduit and having an aperture located at the end of the conduit so that fluid may flow through the conduit, and having spring means (155) to urge said flat plate into sealing contact with an end surface of a rotor end element.

6. A valve according to any of the preceding claims, further characterized in that said port sealing means comprises a blind rotor seal element (154) comprised of a length of cylindrical conduit at least partially located in and concentric with an enlarged diameter end portion of a port, which port is cylindrical in form, said blind rotor element (154) having means for sealing to prevent fluid flow in a direction parallel to the longitudinal axis of said conduit length along the interface of the surface of said enlarged port portion and the external surface of the conduit length, having a flat plate sealably attached to said conduit at one end, said plate being perpendicular to the longitudinal axis of said conduit and covering the end of the conduit so as to block fluid flow through the conduit, and having spring means (155) to urge said flat plate into sealing contact with an end surface of a rotor end element.

## Patentansprüche

1. Axiales Mehrwegedrehventil zum Bereitstellen der gleichzeitigen Verbindung einer Mehrzahl von Leitungen entsprechend einem zuvor festgelegten Zyklus, wobei in jeder Ventilschaltstellung jede Leitung über das Ventil mit nicht mehr als einer anderen Leitung in Verbindung steht und das Ventil aufweist:

a) einen Statoraufbau (11–13), dessen Inneres hohl ist und welcher aus einem zentralen Element (11), einem ersten Endelement (12) und einem zweiten Endelement (13) besteht, wobei jedes der Elemente eine zylindrische äußere Form hat, das zentrale Element (11) erste und zweite innere Querflächen hat, wobei jede Querfläche senkrecht zu einer Drehachse ist, wobei diese Drehachse die Längsachse sowohl des Statoraufbaus (11–13) als auch eines Rotoraufbaus (17, 18) ist, das zentrale Element eine Mehrzahl von inneren Anschlüssen (150, 153) hat, wobei jeder Anschluß durch beide der inneren Querflächen hindurch verläuft und sich von einer der Querflächen in Richtung zu der anderen Querfläche erstreckt und parallel zur Drehachse ist, wobei die Schnitte der Anschlüsse mit jeder Querfläche in einem Kreis angeordnet sind, dessen Mittelpunkt die Drehachse ist, und daß zentrale Element (11) eine Mehrzahl von Öffnungen (151, 152) hat, wobei jede Öffnung (151, 152) sich von einem Anschluß (150, 153) zur Außenfläche des zentralen Statorelementes erstreckt;

b) das Rotorelement (17, 18), welches aus einem Abstandselement (85), einem ersten Endelement (17) und einem zweiten Endelement (18) besteht, wobei das Abstandselement (85) zwischen den Endelementen fest angeschlossen ist, wobei der Rotoraufbau im wesentlichen im hohlen Inneren des Statoraufbaues angeordnet ist derart, daß ein erster ringförmiger Raum zwischen dem ersten Rotorendelement (17) und dem ersten Statorelement (12) gebildet wird, ein zweiter ringförmiger Raum zwischen dem zweiten Rotorendelement (18) und dem zweiten Statorendelement (13) gebildet wird, ein erster Querraum zwischen der ersten Querfläche des zentralen Statorelementes (11) und einer Stirnfläche des ersten Rotorendelementes (17) gebildet wird und ein zweiter Querraum zwischen der zweiten Querfläche des zentralen Statorelementes (11) und einer Stirnfläche des zweiten Rotorendelementes (18) gebildet wird, wobei jede der Stirnflächen des Rotorelementes parallel zu den Querflächen des zentralen Statorelementes ist, wobei der Rotoraufbau sich um die Drehachse in verschiedene Ventilschaltstellungen entsprechend einem vorher festgelegten Zyklus dreht und wobei der Rotoraufbau eine Mehrzahl von inneren Kanälen (37, 38, 166, 167) hat;

c) eine Mehrzahl von Düsen (26–29, 32–34, 36, 50, 64, 78) für den Anschluß der Leitungen an das Ventil, wobei die Düsen an dem Statoraufbau (11–13) angeordnet sind und Fließwege zwischen Leitungen und den ringförmigen Räumen im Innern des Statoraufbaus und zwischen Leitungen und den Öffnungen (151, 152) des zentralen Statorelementes bereitstellen;

d) eine Einrichtung (39, 40, 43) in den ringförmigen Räumen, um Fluiddurchgänge festzulegen, welche mit den inneren Kanälen des Rotoraufbaus in Verbindung stehen, so daß Fluid zwischen den Düsen des Rotorendelementes und den Rotorkanälen durch die Fluiddurchgangseinrichtung des ringförmigen Raumes hindurchtritt:

e) Anschlußdichtungsmittel (154), um das Fließen durch nur ein Ende jedes der zentralen Statorelementanschlüsse (150, 153) zu verhindern und Übertragen zumindest eines Teiles der von dem Fluiddruck resultierenden, darauf ausgeübten Kraft auf das benachbarte Rotorendelement, wobei die wirksame Axialdruckfläche, welche mit jedem Anschlußendbereich verknüpft ist, für die beiden Enden jedes beliebigen Anschlusses gleich ist, wodurch die auf das linke Rotorendelement von Fluid in irgendeinem Anschluß ausgeübte Kraft im wesentlichen gleich der auf ein rechtes Rotorendelement von Fluid in demselben Anschluß ausgeübten Kraft ist und damit eine ausgewogene, schwimmende Aufhängung des Rotoraufbaus zwischen seinen axialen Grenzen gegeben ist; und

f) eine Einrichtung (48) in den Querräumen, um Fluiddurchgänge festzulegen, welche mit den inneren Kanälen (37, 38) des Rotoraufbaus und den Enden der Anschlüsse (150, 153) in Verbindung stehen, welche nicht mit den Anschlußabdichtungsmitteln versehen sind, so daß Fluid zwischen den zentralen Statorelementdüsen und den Rotorkanälen (37, 38) über die zentralen Statorelementöffnungen (151, 152) zumindest einen Abschnitt der Anschlüsse (150, 153) und die Querraumfluiddurchgänge hindurchtritt, und dadurch die Fluidwege vervollständigt, so daß verschiedene Paare von Düsen in jeder Ventilschaltstellung gemäß dem zuvor festgelegten Zyklus in Verbindung stehen.

2.Ventil nach Anspruch 1, weiterhin dadurch gekennzeichnet, daß die Düsen in vier Sätze von Düsen aufgeteilt sind, einen ersten Satz (26, 32, 34, 36), welcher an dem ersten Statorendelement (12) angebracht ist, einen zweiten Satz (28, 33, 64, 78), welcher an dem zweiten Statorendelement (13) angebracht ist, einen dritten Satz (27, 50), welcher an dem zentralen Statorelement (11) unmittelbar neben dem ersten Statorendelement (12) angebracht ist und einen vierten Satz, welcher an dem zentralen Statorelement (11) unmittelbar anschließend an das zweite Statorendelement (13) angebracht ist, wobei die Kanäle in zwei Gruppen aufgeteilt sind, eine erste Gruppe (37, 38, 162, 163), welche Kanäle enthält, die in dem ersten Rotorendelement (17) angeordnet sind, und eine zweite Gruppe (166, 167), welche Kanäle enthält, die in dem zweiten Rotorendelement (18) angeordnet sind, wobei die Anschlüsse in zwei Gruppen aufgeteilt sind, eine erste Gruppe von Anschlüssen (150, 153, 159, 168, 170), welche mit den Kanälen der ersten Gruppe in jeder Ventilschaltstellung registerhaltig ist, und eine zweite Gruppe von Anschlüssen (158, 171, 173), welche in jeder Ventilschaltstellung mit den Kanälen der zweiten Gruppe registerhaltig ist, und wobei die Öffnungen in zwei Gruppen aufgeteilt sind, eine erste Gruppe (151, 152), welche an das erste Statorendelement (12) anschließt, und eine zweite Gruppe, welche an das zweite Statorendelement (13) anschließt, so daß Düsen des ersten Satzes von Düsen mit Düsen des dritten Satzes mit Hilfe von Durchgängen in dem ersten ringförmigen Raum, den Kanälen in der ersten Gruppe von Kanälen, den Durchgängen in dem ersten Querraum, den Anschlüssen aus der ersten Gruppe von Anschlüssen und den Öffnungen der ersten Gruppe von Öffnungen in Verbindung stehen und so daß Düsen des zweiten Satzes mit Düsen des vierten Satzes über die Durchgänge des zweiten ringförmigen Raumes, die Kanäle der zweiten Gruppe, die Durchgänge in dem zweiten Querraum, die Anschlüsse der zweiten Gruppe und die Öffnungen der zweiten Gruppe in Verbindung stehen.

3. Ventil nach Anspruch 1 oder 2, weiterhin dadurch gekennzeichnet, daß die Einrichtung in den ringförmigen Räumen einen drehenden Dichtring (40) aufweist, welcher an einem Rotorendelement angebracht ist und sich um dieses herum erstreckt, wobei der Ring (40) eine Höhe hat, die näherungsweise gleich der Breite des ringförmigen Raumes zwischen den Endelementen des Rotors und des Stators ist und eine Länge hat, die ausreichend ist, um eine Öffnung (45) und einen ringförmigen Durchgang (44) aufzunehmen, wobei die Öffnung (45) und der ringförmige Durchgang (44) einen Fließweg für Fluid zwischen einem Kanal und einer Düse bereitstellen, der ringförmige Durchgang sich um 360° um den Ring herum erstreckt und an einer Seite von einem Abschnitt der Innenfläche des Statorendaufbaus und an den anderen Seiten von dem Ring begrenzt ist, wobei der Ring (40) Dichtungsmittel (52) aufweist, um zu verhindern, daß Fluid aus der Öffnung (45) und dem Kanal in Längsrichtung parallel zur Achse der Drehung entlang des Übergangs eines Abschnitts der Oberfläche des Rotorendelementes zu der Innenfläche des Ringes fließt, und daß der Ring zwei geschmierte drehende Dichtflächen hat, welche sich um 360° um den Ring in Ebenen senkrecht zur Drehachse erstrecken, wobei die Schmierung der Flächen durch Fluidleckage aus dem ringförmigen Durchgang entlang des Überganges der Außenflächen des Ringes und Abschnitten der inneren Oberfläche des Statorendelementes gewährleistet wird.

4. Ventil nach einem der vorstehenden Ansprüche, weiterhin dadurch gekennzeichnet, daß die Einrichtung in den ringförmigen Räumen einen stationären Dichtring (39, 43) aufweist, welcher an einem Statorendelement angebracht ist und sich in Umfangsrichtung um ein Rotorendelement herum erstreckt, wobei der stationäre Dichtring eine Höhe hat, die näherungsweise der Breite des ringförmigen Raumes zwischen den Endelementen des Stators und des Rotors entspricht, der stationäre Dichtring Dichtmittel (52) hat, um zu verhindern, daß Flüssigkeit in Längsrichtung parallel zur Drehachse entlang des Übergangs von der Außenfläche des stationären Dichtringes zu einem Abschnitt der inneren Oberfläche des Statorendelementes fließt, und wobei der stationäre Dichtring (39, 43) zumindest eine geschmierte stationäre Dichtfläche hat, die sich über 360° um den stationären Dichtring herum in einer Ebene senkrecht zur Drehachse erstreckt, wobei die Schmierung für die Dichtfläche durch Fluidleckage aus einem Ringraumfluiddurchgang gewährleistet wird.

5. Ventil nach einem der vorstehenden Ansprüche, weiterhin dadurch gekennzeichnet, daß die Einrichtung in den Querräumen ein offenes Rotordichtungselement (48) aufweist, welches aus einem Längsabschnitt einer zylindrischen Leitung besteht und zumindest teilweise in dem Endabschnitt eines Anschlusses mit vergrößertem Durchmesser und konzentrisch zu diesem Endabschnitt angeordnet ist, wobei der Anschluß von zylindrischer Form ist und das offene Rotordichtungselement (48) Dichtungsmittel (59) hat, um zu verhindern, daß Fluid in Richtung parallel zur Längsachse des Leitungsabschnittes entlang des Übergangs der Oberfläche des vergrößerten Anschlußabschnittes zu der Außenfläche des Leitungsabschnittes fließt, wobei eine flache Platte dichtend an einem Ende der Leitung angebracht ist und die Platte senkrecht zur Längsachse der Leitung verläuft und eine Öffnung auf der Seite der Leitung hat, so daß Fluid durch die Leitung hindurchfließen kann, und eine Federeinrichtung (155) hat, um die flache Platte in dichtenden Kontakt mit einer Stirnfläche eines Rotorendelementes zu bringen.

6. Ventil nach einem der vorstehenden Ansprüche, weiterhin dadurch gekennzeichnet, daß das Anschlußdichtungsmittel ein Rotorblinddichtungselement (154) aufweist, welches aus einem Längenabschnitt einer zylindrischen Leitung besteht, die zumindest teilweise in einem Endabschnitt eines Anschlusses mit vergrößertem Durchmesser und konzentrisch zu diesem Endabschnitt angeordnet ist, wobei der Anschluß von zylindrischer Form ist und das Rotorblindelement (154) Dichtungsmittel hat, um Fluidfluß in Richtung parallel zur Längsachse des Leitungslängsabschnittes entlang des Übergangs der Fläche des vergrößerten Anschlußabschnittes zu der äußeren Oberfläche des Leitungsabschnittes zu verhindern, mit einer flachen Platte, die dichtend an der Leitung an einem Ende angebracht ist, wobei die Platte senkrecht zur Längsachse der Leitung verläuft und das Ende der Leitung abdeckt, um so Fluidfluß durch die Leitung zu blockieren, und mit einer Federeinrichtung (155), um die flache Platte in dichtende Berührung mit einer Stirnfläche eines Rotorendelementes zu drücken.

**Revendications**

1. Distributeur rotatif axial à plusieurs voies destiné à assurer l'interconnexion simultanée de plusieurs conduits d'après un cycle prédéterminé, un conduit quelconque communiquant, par l'intermédiaire du distributeur, avec au maximum un autre conduit pour une position repérée quelconque du distributeur, le distributeur comprenant:

(a) un ensemble de stator (11–13) ayant l'intérieur creux et comprenant un élément central (11), un premier élément d'extrémité (12) et un second élément d'extrémité (13), chacun de ces éléments ayant une forme externe cylindrique, l'élément central (11) ayant une première et une seconde surface interne transversale, chaque surface transversale étant perpendiculaire à un axe de rotation, l'axe de rotation étant l'axe longitudinal de l'ensemble de stator (11–13) et de l'ensemble de rotor (17, 18), l'élément central (11) ayant plusieurs ouvertures internes (150, 153), chaque ouverture recoupant les deux surfaces transversales internes, étant disposée de l'une des surfaces transversales vers l'autre et étant parallèle à l'axe de rotation, les intersections des ouvertures avec chaque surface transversale étant disposées suivant un cercle centré sur l'axe de rotation, l'élément central (11) ayant plusieurs orifices (151, 152), chaque orifice (151, 152) partant d'une ouverture (150, 153) et étant dirigé vers la surface externe de l'élément central de stator,

(b) l'ensemble de rotor (17, 18) comprenant un élément d'entretoise (85), un premier élément d'extrémité (17) et un second élément d'extrémité (18), l'élément d'entretoise (85) étant raccordé rigidement entre les éléments d'extrémité, l'ensemble de rotor étant disposé pratiquement à l'intérieur de l'ensemble de stator de manière qu'un premier volume annulaire soit formé entre le premier élément d'extrémité de rotor (17) et le premier élément d'extrémité de stator (12), qu'un second volume annulaire soit formé entre le second élément d'extrémité de rotor (18) et le second élément d'extrémité de stator (13), qu'un premier volume transversal soit formé entre la première surface transversale de l'élément central de stator (11) et une surface d'extrémité du premier élément d'extrémité de rotor (17), et qu'un second volume transversal soit formé entre la seconde surface transversale de l'élément central de stator (11) et une surface d'extrémité du second élément d'extrémité de rotor (18), chacune des surfaces d'extrémité d'élément de rotor étant parallèle aux surfaces transversales de l'élément central de stator, l'ensemble de rotor tournant autour de l'axe de rotation vers diverses positions repérées du distributeur suivant un cycle prédéterminé, l'ensemble de rotor ayant plusieurs canaux internes (37, 38, 166, 167), (c) plusieurs tubulures (26–29, 32–34, 36, 50, 64, 78) destinées à assurer la connexion des conduits au distributeur, les tubulures étant placées sur l'ensemble de stator (11–13) et formant des trajets de circulation de fluide entre les conduits et les volumes annulaires formés à l'intérieur de l'ensemble de stator et entre les conduits et les orifices de l'élément central de stator (151, 152),

(d) un dispositif (39, 40, 43) disposé dans les volumes annulaires et destiné à délimiter des passages de circulation de fluide qui assurent la communication avec les canaux internes de l'ensemble de rotor afin que du fluide circule entre les tubulures des éléments d'extrémité de rotor et les canaux de rotor par l'intermédiaire des passages de fluide des volumes annulaires,

(e) des dispositifs (154) d'étanchéité d'ouverture destinés à empêcher la circulation par une seule extrémité de chacune des ouvertures (150, 153) d'élément central de stator, et à transférer une partie au moins de la force résultante de la pression du fluide qui lui est appliquée à l'élément adjacent d'extrémité de rotor, la section axiale efficace d'application de pression associée à chaque région d'extrémité d'ouverture étant la même pour les deux extrémités d'une ouverture particulière, si bien que la force appliquée à l'élément d'extrémité gauche de rotor par le fluide d'une ouverture quelconque est pratiquement égale à la force appliquée à l'élément d'extrémité droite de rotor par le fluide de la même ouverture, si bien que l'ensemble de rotor est équilibré et flotte entre ses retenues axiales, et

(f) un dispositif (48) placé dans les volumes transversaux et destiné à délimiter les passages de fluide qui assurent la communication entre les canaux internes (37, 38) de l'ensemble de rotor et les extrémités des ouvertures (150, 153) qui n'ont pas les dispositifs d'étanchéité d'ouverture, si bien que le fluide circule entre les tubulures de l'élément central de stator et les canaux de rotor (37, 38) par l'intermédiaire des orifices (151, 152) d'élément central de stator, une partie au moins des ouvertures (150, 153) et les passages de fluide des volumes transversaux, si bien que des trajets de fluide sont formés de manière que des paires différentes de tubulures communiquent à chaque position repérée du distributeur, conformément au cycle prédéterminé.

2. Distributeur selon la revendication 1, caractérisé en outre en ce que les tubulures sont réparties en quatre ensembles de tubulures, un premier ensemble (26, 32, 34, 36) étant fixé au premier élément d'extrémité de stator (12), un second ensemble (28, 33, 64, 78) étant fixé au second élément d'extrémité de stator (13), un troisième ensemble (27, 50) étant fixé à l'élément central de stator (11) près du premier élément d'extrémité de stator (12), et un quatrième ensemble (29) étant fixé à l'élément central de stator (11) près du second élément d'extrémité de stator (13), les canaux sont répartis en deux groupes, un premier groupe (37, 38, 162, 163) contenant des canaux disposés dans le premier élément d'extrémité de rotor (17) et un second groupe (166, 167) contenant des canaux disposés dans le second élément d'extrémité de rotor (18), les ouvertures sont réparties en deux groupes, un premier groupe d'ouvertures (150, 153, 159, 168, 172) qui est aligné sur des canaux du premier groupe pour chaque position repérée du distributeur et un second groupe d'ouvertures (158, 171, 173) qui est aligné sur les canaux du second groupe pour chaque position repérée du distributeur, et les orifices sont répartis en deux groupes, un premier groupe (151, 152) adjacent au premier élément d'extrémité de stator (12) et un second groupe adjacent au second élément d'extrémité de stator (13), si bien que les tubulures du premier ensemble de tubulures communiquent avec des tubulures du troisième ensemble de tubulures par des passages formés dans le premier volume annulaire, des canaux du premier groupe de canaux, des passages du premier volume transversal, des ouvertures du premier groupe d'ouvertures, et des orifices du premier groupe d'orifices, et que les tubulures du second ensemble communiquent avec des tubulures du quatrième ensemble par des passages du second volume annulaire, des canaux du second groupe, des passages du second volume transversal, des ouvertures du second groupe et des orifices du second groupe.

3. Distributeur selon la revendication 1 ou 2, caractérisé en outre en ce que le dispositif placé dans les volumes annulaires comporte une bague rotative d'étanchéité (40) fixée autour d'un élément d'extrémité de rotor et disposée circonférentiellement autour de celui-ci, la bague (40) ayant une hauteur approximativement égale à la largeur du volume annulaire entre les éléments d'extrémité de rotor et de stator et ayant une longueur suffisante pour qu'elle comporte une ouverture (45) et un passage annulaire (44), l'ouverture (45) et le passage annulaire (44) formant un trajet de circulation de fluide entre un canal et une tubulure, le passage annulaire étant disposé sur 360° autour de la bague et étant délimité d'un côté par une partie de la surface interne d'un élément de stator et des autres côtés par la bague, la bague (40) ayant un dispositif (52) d'étanchéité destiné à empêcher la circulation du fluide provenant de l'ouverture (45) de la bague et du canal dans la direction longitudinale parallèle à l'axe de rotation le long de l'interface d'une partie de la surface de l'élément d'extrémité du rotor et de la surface interne de la bague, la bague ayant deux surfaces rotatives lubrifiées d'étanchéité disposées sur 360° autour de la bague dans des plans perpendiculaires à l'axe de rotation, la lubrification de ces surfaces étant assurée par le fluide qui fuit à partir du passage annulaire le long de l'interface des surfaces externes de la bague et de parties de la surface interne de l'élément d'extrémité de stator.

4. Distributeur selon l'une quelconque des revendications précédentes, caractérisé en outre en ce que le dispositif placé dans les volumes annulaires comporte une bague fixe d'étanchéité (39, 43) fixée à un élément d'extrémité de stator et disposée circonférentiellement autour d'un élément d'extrémité de rotor, la bague fixe d'étanchéité ayant une hauteur approximativement égale à la largeur du volume annulaire, compris entre les éléments d'extrémité de stator et de rotor, la bague fixe d'étanchéité ayant un dispositif (52) destiné à empêcher de manière étanche la circulation du fluide en direction longitudinale parallèle à l'axe de rotation le long de l'interface de la surface externe de la bague fixe d'étanchéité et d'une partie de la surface interne de l'élément d'extrémité de stator, la bague fixe d'étanchéité (39, 43) ayant au moins une surface fixe lubrifiée d'étanchéité disposée sur 360° autour de la bague fixe d'étanchéité dans un plan perpendiculaire à l'axe de rotation, la lubrification de la surface d'étanchéité étant assurée par le fluide qui fuit à partir d'un passage de fluide d'un volume annulaire.

5. Distributeur selon l'un quelconque des revendications précédentes, caractérisé en outre en ce que le dispositif placé dans les volumes transversaux comporte un élément ouvert (48) d'étanchéité de rotor comprenant un tronçon de conduit cylindrique disposé au moins partiellement dans une partie d'extrémité de diamètre élargi d'une ouverture et concentrique à cette partie d'extrémité, l'ouverture ayant une forme cylindrique, l'élément ouvert (48) d'étanchéité du rotor comprenant un dispositif (59) destiné à empêcher de manière étanche l'écoulement du fluide en direction parallèle à l'axe longitudinal du tronçon de conduit, à l'interface de la surface de la partie élargie d'ouverture et de la surface externe du tronçon de conduit, et ayant une plaque plate fixée de manière étanche au conduit à une première extrémité, cette plaque étant perpendiculaire à l'axe longitudinal du conduit et ayant une ouverture disposée à l'extrémité du conduit afin que le fluide puisse s'écouler dans le conduit, et comportant un dispositif à ressort (155) destiné à repousser la plaque plate en contact étanche avec une surface d'extrémité d'un élément d'extrémité de rotor.

6. Distributeur selon l'une quelconque des revendications précédentes, caractérisé en outre en ce que le dispositif d'étanchéité d'ouverture comporte un élément borgne (154) d'étanchéité de rotor comprenant un tronçon de conduit cylindrique placé au moins partiellement dans une partie d'extrémité de diamètre agrandi d'une ouverture et concentrique à cette partie, l'ouverture ayant une forme cylindrique, l'élément borgne (154) ayant un dispositif assurant l'étanchéité afin que le fluide ne puisse pas s'écouler en direction parallèle à l'axe longitudinal du tronçon de conduit le long de l'interface de la surface de la partie élargie d'ouverture et de la surface externe du tronçon de conduit, et ayant une plaque plate fixée de manière étanche au conduit à une première extrémité, la plaque étant perpendiculaire à l'axe longitudinal du conduit et recouvrant l'extrémité du conduit afin que le fluide ne puisse pas circuler dans le conduit, et ayant un dispositif à ressort (155) destiné à repousser la plaque plate en contact étanche avec une surface d'extrémité d'un élément d'extrémité de rotor.

# FIG.1

FIG. 2

FIG.3

EP 0 231 568 B1

FIG.4

FIG.5

FIG.6
STEP 1

FIG.8

FIG.7

FIG.6
STEP 3